(19) **Europäisches Patentamt European Patent Office Office européen des brevets**

(11) **EP 2 054 960 B1**

(12) **EUROPEAN PATENT SPECIFICATION**

(45) Date of publication and mention
of the grant of the patent:
**17.07.2019 Bulletin 2019/29**

(21) Application number: **07826119.5**

(22) Date of filing: **23.08.2007**

(51) Int Cl.:
*H01M 10/05* (2010.01)   *H01M 10/052* (2010.01)
*H01M 4/136* (2010.01)   *H01M 4/1397* (2010.01)
*H01M 6/16* (2006.01)   *H01M 4/58* (2010.01)
*H01M 4/62* (2006.01)   *H01M 4/66* (2006.01)
*H01M 4/02* (2006.01)

(86) International application number:
**PCT/IB2007/053385**

(87) International publication number:
**WO 2008/023348 (28.02.2008 Gazette 2008/09)**

(54) **BATTERY**

BATTERIE

BATTERIE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **23.08.2006 US 508680**

(43) Date of publication of application:
**06.05.2009 Bulletin 2009/19**

(60) Divisional application:
**12167867.6 / 2 490 286**

(73) Proprietor: **Duracell U.S. Operations, Inc.
Wilmington, DE 19801 (US)**

(72) Inventor: **STEVANOVIC, Maya
Danbury, Connecticut 06810 (US)**

(74) Representative: **Hoyng Rokh Monegier LLP
Rembrandt Tower, 31st Floor
Amstelplein 1
1096 HA Amsterdam (NL)**

(56) References cited:
**US-A1- 2005 112 462   US-A1- 2005 112 467**

Remarks:
The file contains technical information submitted after
the application was filed and not included in this
specification

## Description

### TECHNICAL FIELD

The invention relates to batteries, as well as to related components and methods.

### BACKGROUND

Batteries or electrochemical cells are commonly used electrical energy sources. A battery contains a negative electrode, typically called the anode, and a positive electrode, typically called the cathode. The anode contains an active material that can be oxidized; the cathode contains or consumes an active material that can be reduced. The anode active material is capable of reducing the cathode active material.

When a battery is used as an electrical energy source in a device, electrical contact is made to the anode and the cathode, allowing electrons to flow through the device and permitting the respective oxidation and reduction reactions to occur to provide electrical power. An electrolyte in contact with the anode and the cathode contains ions that flow through the separator between the electrodes to maintain charge balance throughout the battery during discharge.

US2005/112462, published on May 26th 2005, discloses a lithium/iron disulfide electrochemical battery cell with a high discharge capacity. The cell has a lithium negative electrode, an iron disulfide positive electrode and a nonaqueous electrolyte. The positive electrode mixture containing the iron disulfide contains highly packed solid materials, with little space around the solid particles, to provide a high concentration of iron disulfide within the mixture. Packing values of 57% and 64% are exemplified.

US2005/0112467 describes a lithium battery including aluminium components, wherein the cathode porosity can be controlled by adjusting the final thickness of the calendered cathode.

### SUMMARY

The invention features a method of making a cathode for a battery, in accordance with the claims. Embodiments can include one or more of the following features.

The battery can be a primary battery or a secondary battery. At least one side of the current collector can support at least about 22 milligrams (e.g., at least about 23 milligrams, at least about 24 milligrams, at least about 25 milligrams, at least about 26 milligrams, at least about 27 milligrams, at least about 28 milligrams, at least about 29 milligrams) and/or at most about 30 milligrams (e.g., at most about 29 milligrams, at most about 28 milligrams, at most about 27 milligrams, at most about 26 milligrams, at most about 25 milligrams, at most about 24 milligrams, at most about 23 milligrams) of the cathode material per square centimeter of the side of the current collector.

The cathode material can include a binder. In some embodiments, the cathode material can include at most five percent by weight of the binder. The binder can include a polymer, such as a polyvinylidene fluoride, a styrene-ethylene-butylene-styrene block copolymer, or other hydrocarbon resins.

The cathode material can include a conductive aid. The conductive aid includes graphite and/or carbon black. In some embodiments, the conductive aid can include graphitized carbon black. The cathode material includes at least about one percent by weight, and at most about three percent by weight, carbon black and/or graphite.

The cathode material can be in the form of at least one layer that is supported by a current collector. The layer can contact the current collector.

The current collector can include aluminum and/or an aluminum alloy. The current collector can include a foil. The foil can have a temper of H18 or H19. The foil can have a thickness of at least about 20 microns and/or at most about 35 microns.

The anode can include lithium.

The slurry can include at least about 55 percent by weight, and/or at most about 70 percent by weight, iron disulfide.

The slurry can include a conductive aid, which can include carbon black and/or graphite. In some embodiments, the slurry can include a conductive aid including graphitized carbon black. The slurry can include at least about three percent by weight, and/or at most about eight percent by weight, of the conductive aid. The slurry can include at least about one percent by weight, and/or at most about three percent by weight, carbon black. The slurry can include at least about two percent by weight, and/or at most about six percent by weight, graphite.

The slurry can include a binder including a polyvinylidene fluoride and/or a styrene-ethylene-butylene-styrene block copolymer. The slurry can include at least about two percent by weight, and/or at most about five percent by weight, of a binder.

The slurry can have a viscosity of at least about 3000 mPas and/or at most about 15000 mPas. When the slurry is applied to the substrate, the coated cathode can have a dry thickness of at least about 200 microns and/or at most about 400 microns, excluding the current collector.

The solvent can include an aromatic hydrocarbon, an aliphatic hydrocarbon, and/or N-methyl pyrrolidone.

Embodiments can include one or more of the following advantages.

The present invention relates to a method of making a battery including a relatively high amount of a cathode material including iron disulfide (e.g., at least 21.5 milligrams of the cathode material per square centimeter of a side of the cathode current collector) exhibits enhanced electrochemical performance relative to a battery including a smaller amount of a cathode material and/or including a cathode material that does not include iron disulfide.

The present invention relates to a method of making a cathode including iron disulfide also includes a relatively small amount of one or more conductive materials. The conductive materials can enhance the electronic conductivity of the cathode, and/or the electrochemical performance of a battery including the cathode, while occupying a relatively small amount of space in the battery housing.

In some embodiments, a cathode including iron disulfide can also include one or more binders. The binders can help to maintain and/or enhance the homogeneity of the cathode material and/or the cathode material slurry. A cathode material having relatively good homogeneity can have relatively uniformly distributed components, and/or can include components having relatively good contact with each other. In certain embodiments, a cathode slurry having relatively good homogeneity can be used to provide a relatively uniform cathode material coating on a cathode current collector.

In some embodiments, a method of making a cathode can include forming a slurry including one or more solvents that have a relatively low volatility and/or that are relatively viscous. The slurry can be used to form a relatively thick coating on a cathode current collector, and/or can be used to form a cathode having a relatively low susceptibility to drying defects such as cracking.

In certain embodiments, a method of making a cathode can include coating a current collector (e.g., an aluminum foil) with a slurry using one or more extrusion die coating and/or roll-coating methods. The extrusion die coating and/or roll-coating methods can result in the formation of a relatively thick coating of the slurry on the current collector. The invention s includes

The invention's method of making a cathode includes gradually drying a slurry-coated current collector in a dryer having multiple drying zones. This drying process can, for example, result in a relatively low likelihood of cracking of the cathode.

In certain embodiments, a cathode can include pores, which can allow for diffusion of an electrolyte within a battery including the cathode. In some embodiments, the pores can result in enhanced electrochemical performance of a battery including the cathode.

In certain embodiments, a battery including a cathode including iron disulfide can exhibit relatively good electrochemical performance under a relatively large load (e.g., a digital camera). In some embodiments, as the amount of iron disulfide in the cathode increases, the electrochemical performance of the battery can become enhanced.

Other aspects, features, and advantages of the invention are in the drawings, description, and claims.

## DESCRIPTION OF DRAWINGS

FIG. 1 is a sectional view of an embodiment of a non-aqueous electrochemical cell.
FIG. 2 is an illustration of an embodiment of a coating process.
FIG. 3 is an illustration of an embodiment of a coating process.

## DETAILED DESCRIPTION

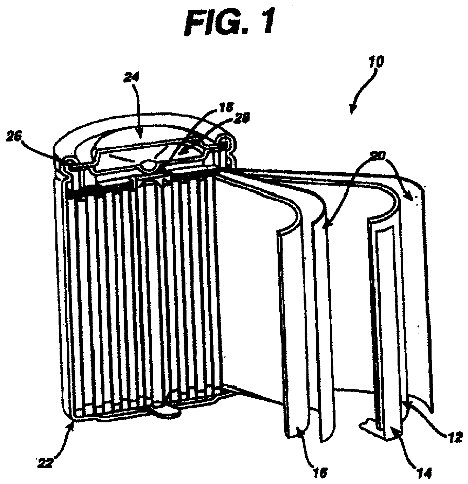

Referring to FIG. 1, a primary electrochemical cell 10 includes an anode 12 in electrical contact with a negative lead 14, a cathode 16 in electrical contact with a positive lead 18, a separator 20, and an electrolytic solution. Anode 12, cathode 16, separator 20, and the electrolytic solution are contained within a case 22. The electrolytic solution includes a solvent system and a salt that is at least partially dissolved in the solvent system. Electrochemical cell 10 further includes a cap 24 and an annular insulating gasket 26, as well as a safety valve 28.

Cathode 16 includes a cathode current collector and a cathode material that is coated on at least one side of the cathode current collector. The cathode material includes one or more cathode active materials. In some embodiments, the cathode material can also include one or more conductive materials (e.g., conductive aids, charge control agents) and/or one or more binders.

Cathode 16 includes a relatively high loading of the cathode material. Typically, as the loading of the cathode material in cathode 16 increases, the electrochemical performance of cathode 16 can become enhanced. In certain embodiments, at least one side of the cathode current collector can have a loading of more than 21.5 milligrams (e.g., at least about 22 milligrams, at least about 23 milligrams, at least about 24 milligrams, at least about 25 milligrams, at least about 26 milligrams, at least about 27 milligrams, at least about 28 milligrams, at least about 29 milligrams, at least about 30 milligrams, at least about 31 milligrams, at least about 32 milligrams, at least about 33 milligrams, at least about 34 milligrams) and/or at most about 35 milligrams (e.g., at most about 34 milligrams, at most about 33 milligrams, at most about 32 milligrams, at most about 31 milligrams, at most about 30 milligrams, at most about 29 milligrams, at most about 28 milligrams, at most about 27 milligrams, at most about 26 milligrams, at most about 25 milligrams, at most about 24 milligrams, at most about 23 milligrams, at most about 22 milligrams) of the cathode material per square centimeter of the side of the cathode current collector. As used herein, the loading of cathode material on one side of cathode 16 is calculated by sampling of a coated area or, for example, when both sides are coated in the same manner, according to formula (1) below, in which $L_{cm}$ = average loading of cathode material per side, $M_{cat}$ = weight of the coated cathode, $M_{cc}$ = weight of the cathode current collector, and $A_{cc}$ = coated area of the cathode current collector:

$$(1) \qquad L_{cm} = (M_{cat} - M_{cc})/2A_{cc}$$

where sample area for $L_{cm}$, $M_{cat}$ and $A_{cc}$ is the same.

Examples of cathode active materials that can be included in the cathode material of cathode 16 include metal oxides, halides, chalcogenides, sulfur, organosulfur polymers, and conducting polymers. The cathode 16 includes iron disulfide ($FeS_2$). Other examples of cathode active materials include $MnO_2$, $V_2O_5$, $CoF_3$, $MoS_2$, $SOCl_2$, $MoO_3$, S, $(C_6H_5N)_n$, and $(S_3N_2)_n$, where n is at least 2.

The cathode material of cathode 16 includes a relatively high weight percent of iron disulfide. The cathode material of cathode 16 includes at least 91 percent by weight and at most 99 percent by weight of iron disulfide. In some embodiments, a battery with a cathode including a cathode material having a relatively high weight percent of iron disulfide can exhibit enhanced electrochemical performance relative to a battery with a cathode including a cathode material having a relatively low weight percent of iron disulfide.

Examples of conductive materials include conductive aids and charge control agents. Specific examples of conductive materials include carbon black, graphitized carbon black, acetylene black, and graphite. The conductive materials can be used, for example, to enhance the electronic conductivity of cathode 16 within electrochemical cell 10. In some embodiments, the conductive materials can enhance the electronic conductivity of cathode 16 while also occupying a relatively low volume of cathode 16. As the volume of cathode 16 that is occupied by conductive materials decreases, the volume of cathode 16 that is available for cathode active materials can increase. As the amount of cathode active material used in cathode 16 increases, the electrochemical performance of electrochemical cell 10 can also increase.

In some embodiments, the cathode material of cathode 16 can include at most about three percent by weight (e.g., at most about two percent by weight) and/or at least about one percent by weight (e.g., at least about two percent by weight) carbon black.

As discussed above, in some embodiments, the cathode material of cathode 16 can include one or more binders. The binders can help improve cohesion and adhesion of the cathode material and help keep the powders suspended in slurry. Examples of binders include linear di- and tri-block copolymers. In certain embodiments, the linear di- and tri-block copolymers can be substantially free of double bonds in their primary polymer chains, and/or can include conjugated double bonds in their primary polymer chains. In some embodiments, a binder can include polystyrene (e.g., in an amount of from 29 percent by weight to 33 percent by weight). Additional examples of binders include linear tri-block polymers cross-linked with melamine resin; ethylene-propylene copolymers (e.g., with an ethylene content of at least about 40 percent); ethylene-propylene-diene terpolymers (e.g., with ethylene contents below about 70 percent);

tri-block fluorinated thermoplastics (e.g., TFE/HFP/VF2 terpolymer, in which TFE is tetrafluoroethylene, HFP is hexafluoropropylene, and VF2 is vinylidene fluoride); fluorinated polymers (e.g., polytetrafluoroethylene (PTFE)); hydrogenated nitrile rubber (e.g., with at least about 30 percent acrylonitrile); fluoro-ethylene-vinyl ether copolymers; thermoplastic polyurethanes (TPU); thermoplastic olefins (TPO); styrene-ethylene-butylene-styrene (SEBS) block copolymers (e.g., Kraton® G1651 polymer); and polyvinylidene fluoride (PVDF) homopolymers (e.g., Kynar® 761 polymer). In some embodiments, the cathode material of cathode 16 can include a binder that is formed of a film-forming polymer. As used herein, a film-forming polymer can be added to a solvent to form a solution, which can then be dried to form a film. In certain embodiments, one or more binders can be modified (e.g., to result in enhanced cathode properties). As an example, a low molecular weight rubber binder can be cross-linked and/or vulcanized. The presence of the cross-linked and/or vulcanized binder in a cathode can, for example, enhance the solvent resistance of the cathode. In some embodiments, a binder can be cross-linked in a dryer (e.g., during a process in which cathode slurry is dried while supported by a cathode current collector).

In certain embodiments, the cathode material of cathode 16 can include at least about one percent by weight (e.g., at least about two percent by weight, at least about three percent by weight, at least about four percent by weight) and/or at most about five percent by weight (e.g., at most about four percent by weight, at most about three percent by weight, at most about two percent by weight) of one or more binders.

The cathode current collector in cathode 16 can be formed of, for example, one or more metals and/or metal alloys. Examples of metals include titanium, nickel, and aluminum. Examples of metal alloys include aluminum alloys (e.g., 1N30, 1230) and stainless steel. A cathode current collector can be in the form of, for example, a foil or a grid. For example, in some embodiments, a cathode current collector can be in the form of an aluminum foil. In certain embodiments, a cathode current collector can be formed of a relatively thin foil. For example, a cathode current collector can be formed of a foil having a thickness of at most about 35 microns (e.g., at most about 30 microns, at most about 25 microns) and/or at least about 20 microns (e.g., at least about 25 microns, at least about 30 microns). As the thickness of the foil that is used for the cathode current collector decreases, the volume in the cathode that is available for cathode material can increase. In some embodiments, a cathode current collector can be formed of a foil having a temper of H18 or H19. In certain embodiments, one or more primers can be applied to a cathode current collector. In some embodiments, a pre-primed foil (e.g., from Lamart Corp., Clifton, NJ) can be used to form a cathode current collector. In certain embodiments, a cathode current collector can be formed of an aluminum foil that has been primed with a water-based primer (e.g., Dag® EB 012 water-based primer, from Acheson Industries). A water-based primer can be applied to a foil using, for example, spray, gravure, and/or intermittent reverse roll coating techniques. In certain embodiments, a cathode current collector can include from about 0.5 milligram to about one milligram of one or more primers per square centimeter of the cathode current collector.

Cathode 16 is formed in accordance with the claims.

First, one or more cathode active materials, conductive materials, and/or binders are combined with one or more solvents to form a slurry (e.g., by dispersing the cathode active materials, conductive materials, and/or binders in the solvents using a double planetary mixer). In some embodiments, the slurry can include at least about 55 percent by weight (e.g., at least about 60 percent by weight, at least about 65 percent by weight) and/or at most about 70 percent by weight (e.g., at most about 65 percent by weight, at most about 60 percent by weight) of one or more cathode active materials, such as iron disulfide. In certain embodiments, the slurry can include at least about four percent by weight (e.g., at least about five percent by weight) and/or at most about six percent by weight (e.g., at most about five percent by weight) of one or more conductive materials (e.g., carbon black, graphite). In some embodiments, the slurry can include at least about two percent by weight (e.g., at least about three percent by weight, at least about four percent by weight) and/or at most about five percent by weight (e.g., at most about four percent by weight, at most about three percent by weight) of one or more binders (e.g., PVDF homopolymer, SEBS copolymer).

As discussed above, the slurry includes one or more solvents, such as a blend of solvents. The solvents are defined in the claims. In certain embodiments, a slurry including one or more of these solvents can be used to form a relatively thick coating on a cathode current collector, and/or to form a cathode that has a relatively low susceptibility to cracking. In some embodiments, a slurry including one or more of these solvents can be used to form a coating that has few or no defects, and/or that is relatively uniform. Examples of solvents include aromatic hydrocarbons (e.g., Shell Sol® A100) and aliphatic hydrocarbons (e.g., Shell Sol® OMS). In some embodiments, a slurry can include one or more normal hydrocarbons (e.g., hexane) and/or branched hydrocarbons. In certain embodiments, the slurry can include one or more iso- and/or cyclo- paraffinic solvents (e.g., VM&P Naphtha HT®).

In some embodiments, the slurry can include at least about 25 percent by weight (e.g., at least about 30 percent by weight, at least about 35 percent by weight, at least about 40 percent by weight) and/or at most about 45 percent by weight (e.g., at most about 40 percent by weight, at most about 35 percent by weight, at most about 30 percent by weight) of one or more solvents.

In certain embodiments, the slurry can have a relatively high viscosity. In some embodiments, the slurry can have a viscosity of at least about 3,000 mPas (e.g., at least about 4,000 mPas, at least about 5,000 mPas, at least about 6,000 mPas, at least about 7,000 mPas, at least about 8,000 mPas, at least about 9,000 mPas, at least about 10,000 mPas, at least about 11,000 mPas, at least about 12,000 mPas, at least about 13,000 mPas, at least about 14,000 mPas) and/or at most about 40,000 mPs (e.g., at most about 14,000 mPas, at most about 13,000 mPas, at most about 12,000 mPas, at most about 11,000 mPas, at most about 10,000 mPas, at most about 9,000 mPas, at most about 8,000 mPas, at most about 7,000 mPas, at most about 6,000 mPas, at most about 5,000 mPas, at most about 4,000 mPas). For example, the slurry can have a viscosity of from about 3,000 mPas to about 6,000 mPas. As used herein, the viscosity of a slurry is measured using a Brookfield® viscometer (Model DV III, available from Brookfield Engineering Laboratories.

In certain embodiments, a slurry that is used to form a cathode can include from about 55 percent to about 70 percent by weight of iron disulfide, from about four percent to about six percent by weight of one or more conductive materials (e.g., carbon black, graphite), from about two percent to about five percent by weight of one or more binders (e.g., PVDF homopolymer, SEBS copolymer), and from about 25 percent to about 45 percent by weight of one or more solvents (e.g., Shell Sol® A100, Shell Sol® OMS, NMP). In some embodiments, a slurry that is used to form a cathode can include from about 55 percent to about 75 percent by weight solids, and can have a viscosity of from about 3,000 mPas to about 15,000 mPas (e.g., from about 3,000 mPas to about 6,000 mPas).

After the slurry has been formed, the cathode current collector (e.g., aluminum foil) can be coated with the slurry. In some embodiments, the coating process can include extrusion die coating or roll-coating.

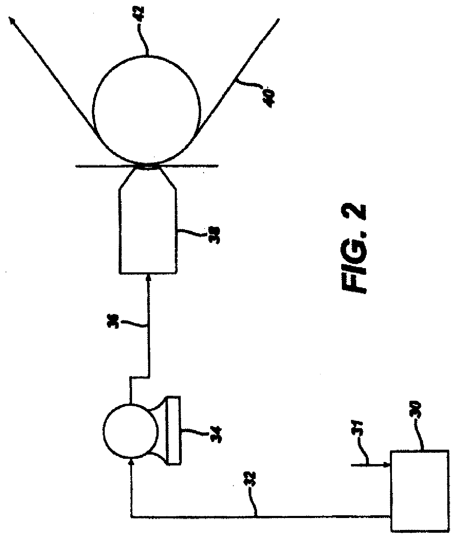

In certain embodiments, an extrusion die coating process can include using a closed, pressurized fluid dispensing system. For example, as shown in FIG. 2, a cathode slurry is pumped into a pressure pot 30. Air 31 is pumped into pressure pot 30, forcing the cathode slurry through a slurry feed line 32. From slurry feed line 32, the cathode slurry enters a metering pump 34. Metering pump 34 regulates the flow of solution through a feed line 36. Feed line 36 feeds into an extrusion die 38. A foil 40, which can be primed as described above, moves over a backing roll 42. As foil 40 passes by extrusion die 38, the cathode slurry is applied to foil 40. Foil 40 can be coated on one side, or on both sides. For example, the gap between extrusion die 38 and backing roll 42 can be set at a predetermined distance for the first pass of foil 40. If the other side of foil 40 is to be coated, then the gap between extrusion die 38 and backing roll 42 can be increased to accommodate foil 40, which has already been coated on one side.

In some embodiments, roll-coating can be done using a knife-over-roll coating process. In certain embodiments, the roll coating process can be an intermittent or a continuous roll coating process.

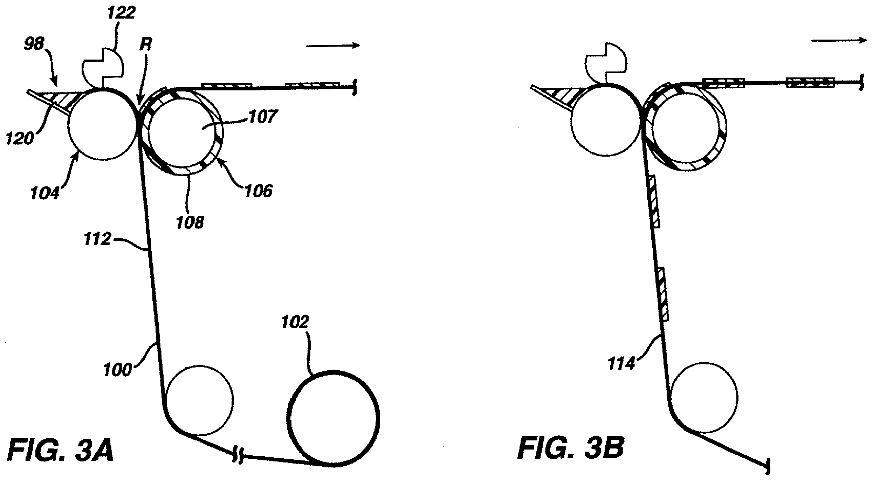

Referring to Figs. 3A and 3B, slurry 98 is coated onto a continuous sheet 100 of foil using an intermittent reverse comma roll coating process. Sheet 100 is introduced from a spool 102 to a region R located between two counter-rotating rolls 104 and 106. Roll 106 includes an inner portion 107 formed of a metal and an outer portion 108 surrounding the inner portion that is made of a high friction, resilient, and chemically inert material such as a highly crosslinked rubber. Outer portion 108 pulls sheet 100 through region R. Slurry 110 is applied to roll 104 from a reservoir 120. Excess slurry is removed by a knife edge roller 122, which can assist to the application of an uniform coating thickness onto roll 104. Roll 104 transfers slurry 110 to a first side 112 of sheet 100. Rolls 104 and 106 can separate and interrupt application of slurry 110 to sheet 98 to form slurry patches.

Separation of rolls 104 and 106 can also produce uncoated spaces between adjacent slurry patches. Separation of rolls 104 and 106 can be cam or computer controlled.

The coating speed is variable from one cathode to a different cathode. This can, for example, allow for the application of slurry coatings having varying viscosities. As an example, relatively viscous slurries can be applied to a continuous sheet using a relatively slow coating speed. In some embodiments, coating speed can be varied for a given continuous sheet. This can, for example, result in a cathode having non-uniform slurry patches on the sheet.

After first side 112 of continuous sheet 98 has been coated with slurry patches, the patches are dried by passing the sheet through multiple drying zones (e.g., three drying zones) in which heated air is directed at the wet surface. The air speed and temperature are gradually ramped up from zone to zone. The coated sheet can be dried, for example, for about 0.5 minutes to 15 minutes in each zone. In certain embodiments, a multi-zone dryer can include a zone having a temperature of about 40°C, a zone having a temperature of about 60°C, and a zone having a temperature of about 130°C. The coated sheet can pass through the drying zones at a line speed, for example, of at least about 0.5 meter per minute (e.g., at least 0.7 meter per minute) and/or at most 0.8 meter per minute.

The coating and drying processes described above optionally can be repeated on second side 114 of continuous sheet 98 (Fig. 3B), to produce a continuous sheet of foil having dried patches on side 112 and dried patches on side 114.

A same or analogous drying procedure can be used in conjunction with other coating processes, for example, extrusion die coating.

In some embodiments, the coaling process can include a reverse roll-coating process. A reverse roll-coating process is described, for example, in Stevanovic, U.S. Patent Application Serial No. 11/313,509, filed on December 21, 2005, and entitled "Cathode for Battery".

In certain embodiments, the coating speed for any of the coating procedures can be at least about 0.2 meter per minute (e.g., at least about 0.6 meter per minute, at least about 0.7 meter per minute, at least about 0.8 meter per minute, at least about 0.9 minute) and/or at most about one meter per minute (at most 0.9 meter per minute, at most 0.8 meter per minute, at most 0.7 meter per minute, at most 0.6 meter per minute). For example, the coating speed can be from about 0.5 meter per minute to about 0.7 meter per minute.

After a cathode has been dried, the cathode is calendered. Before calendering, the uncoated edges of the cathode are slit off to limit wrinkling of the coating-free zones. The cathode can be calendered using a four-roll modified "Z" calender with a roll width of about 300 mm inches and a roll diameter of about 400 mm. The calender rolls can be heated and/or cooled as needed. In some embodiments, the cathode can be calendered off-line, in a continuous mode (e.g., reel-to-reel). In certain embodiments, a 2 x 2 roll configuration with two nips, or a two-roll configuration with one nip, can be used. In certain embodiments, calendering can occur at a temperature of at least about 25°C and/or at most about 60°C. In some embodiments, the calender can have a line speed of at least about 0.9 meter per minute (e.g., at least about one meter per minute, at least, about 1.1 meters per minute) and/or at most about 1.2 meters per minute (e.g., at most about 1.1 meters per minute, at most about one meter per minute). In some embodiments, elongation of a foil current collector (e.g., a 20-micron thick current collector) after calendering can be less than 1.5 percent. In certain embodiments, a foil current collector can be relatively unlikely to experience strain-hardening as a result of the calendering process.

In some embodiments, the calendered cathode can have a thickness of at least about 0.15 millimeter (e.g., at least about 0.175 millimeter, at least about 0.18 millimeter, at least about 0.19 millimeter, at least about 0.2 millimeter, at least about 0.225 millimeter, at least about 0.25 millimeter, at least about 0.275 millimeter) and/or at most about 0.3 millimeter (e.g., at most about 0.275 millimeter, at most about 0.25 millimeter, at most about 0.225 millimeter, at most about 0.2 millimeter, at most about 0.19 millimeter, at most about 0.18 millimeter, at most about 0.175 millimeter). For example, in some embodiments, the cathode can have a thickness of at least 0.172 millimeter and/or at most 0.188 millimeter.

Calendering results in the reduction of pores in the cathode material of a cathode. These pores can, for example, permit an electrolyte to diffuse within a battery including the cathode. The diffusion of the electrolyte can, in turn, result in enhanced electrochemical performance of the battery. In some embodiments, the cathode material of a cathode can have a porosity of at least about 20 percent (e.g., at least about 25 percent) and/or at most about 30 percent, e.g., at most about 25 percent). In certain embodiments, the cathode material of a cathode can have a porosity of from about 22 percent to about 30 percent. As used herein, the porosity of the cathode material of a cathode is equal to the percent by volume of the cathode material that is occupied by pores. The porosity of the cathode material is calculated according to equation (2) below, in which $V_{final}$ = volume of the final cathode, and $V_{theo}$ = theoretical volume of the cathode material in the final cathode minus the volume of the current collector:

$$(2) \qquad \% \text{ Porosity} = \frac{V_{final} - V_{theo}}{V_{final}} * 100$$

In some embodiments, calendering can result in the formation of a relatively thin cathode. As one or more of the dimensions (e.g., thickness) of a cathode decreases, the amount of space that is available within a battery including the cathode can increase. This space can be used, for example, to hold other battery components and/or to accommodate gas evolution during battery operation. In certain embodiments, after a cathode has been calendered, the cathode can have a thickness that is at most about 85 percent (e.g., at most about 82 percent, at most about 80 percent, at most about 78 percent) and/or at least about 75 percent (e.g., at least about 78 percent, at least about 80 percent, at least about 82 percent) of the thickness of the cathode prior to calendering.

Anode 12 includes one or more anode active materials, usually in the form of an alkali metal (e.g., lithium, sodium, potassium) and/or an alkaline earth metal (e.g., calcium, magnesium). Anode 12 can include an alloy of an alkali metal (e.g., lithium) and an alkaline earth metal and/or an alloy of an alkali metal and aluminum. For example, in some embodiments, anode 12 can include a lithium-aluminum alloy. Alternatively or additionally, anode 12 can include a lithium-insertion compound (e.g., such as $LiC_6$, $Li_4Ti_5O_{12}$, $LiTiS_2$). Anode 12 may include a substrate (e.g., a current collector), or may not include a substrate. In some embodiments, particularly anode 12 can include one or more binders. Examples of binders include polyethylene, polypropylene, styrene-butadiene rubbers, and polyvinylidene fluoride (PVDF). In some embodiments in which anode 12 includes one or more binders, the anode active materials can include tin-based materials, carbon-based materials (e.g., carbon, graphite, an acetylenic mesophase carbon, coke), metal oxides, and/or lithiated metal oxides. The anode active material and one or more binders can be mixed to form a paste which can be applied to a substrate. Specific anode active materials that are used in a cell may be a function of, for example, the type of cell (such as primary or secondary).

The electrolytic solution or electrolyte can be in liquid, solid or gel (polymer) form. In some embodiments, the electrolyte can include an organic solvent such as propylene carbonate (PC), ethylene carbonate (EC), dimethoxyethane (DME) (e.g., 1,2-dimethoxyethane), butylene carbonate (BC), dioxolane (DX), tetrahydrofuran (THF), gamma-butyrolactone, diethyl carbonate (DEC), dimethyl carbonate (DMC), ethyl methyl carbonate (EMC), dimethylsulfoxide (DMSO), methyl formiate (MF), sulfolane, or a combination (e.g., a mixture) thereof. In certain embodiments, the electrolyte can include an inorganic solvent, such as $SO_2$ or $SOCl_2$. In some embodiments, the electrolyte can include one or more salts (e.g., two salts, three salts, four salts). Examples of salts include lithium salts, such as lithium trifluoromethanesulfonate (LiTFS), lithium trifluoromethane-sulfonimide (LiTFSI), and lithium hexafluorophosphate ($LiPF_6$). Additional lithium salts that can be included are described, for example, in Suzuki, U.S. Patent No. 5,595,841. Other salts that can be included in the electrolyte are bis(oxalato)borate salts. Bis(oxalato)borate salts are described, for example, in Totir et al., U.S. Patent Application Publication No. US 2005/0202320 A1, published on September 15, 2005, and entitled "Non-Aqueous Electrochemical Cells".

Positive lead 18 can include stainless steel, aluminum, an aluminum alloy, nickel, titanium, or steel. Positive lead 18 can be annular in shape, and can be arranged coaxially with the cylinder of a cylindrical cell. Positive lead 18 can also include radial extensions in the direction of cathode 16 that can engage the current collector. An extension can be round (e.g., circular or oval), rectangular, triangular or another shape. Positive lead 18 can include extensions having different shapes. Positive lead 18 and the current collector are in electrical contact. Electrical contact between positive lead 18 and the current collector can be achieved by mechanical contact. In some embodiments, positive lead 18 and the current collector can be welded together.

Separator 20 can be formed of any of the standard separator materials used in electrochemical cells. For example, separator 20 can be formed of polypropylene (e.g., nonwoven polypropylene, microporous polypropylene), polyethylene, and/or a polysulfone. Separators are described, for example, in Blasi et al., U.S. Patent No. 5,176,968.

Case 22 can be made of, for example, one or more metals (e.g., aluminum, aluminum alloys, nickel, nickel plated steel, stainless steel) and/or plastics (e.g., polyvinyl chloride, polypropylene, polysulfone, ABS, polyamide).

Cap 24 can be made of, for example, aluminum, nickel, titanium, or steel.

While electrochemical cell 10 in FIG. 1 is a primary cell, in some embodiments a secondary cell can have a cathode that includes the above-described cathode active material. Primary electrochemical cells are meant to be discharged (e.g., to exhaustion) only once, and then discarded. Primary cells are not intended to be recharged. Primary cells are described, for example, in David Linden, Handbook of Batteries (McGraw-Hill, 2d ed. 1995). Secondary electrochemical cells can be recharged for many times (e.g., more than fifty times, more than a hundred times, or more). In some cases, secondary cells can include relatively robust separators, such as those having many layers and/or that are relatively thick. Secondary cells can also be designed to accommodate for changes, such as swelling, that can occur in the cells. Secondary cells are described, for example, in Falk & Salkind, "Alkaline Storage Batteries", John Wiley & Sons, Inc. 1969, and DeVirloy et al., U.S. Patent No. 345,124.

To assemble the cell, separator 20 can be cut into pieces of a similar size as anode 12 and cathode 16 and placed therebetween, as shown in FIG. 1. Anode 12, cathode 16, and separator 20 are then placed within case 22, which is then filled with the electrolytic solution and sealed. One end of case 22 is closed with cap 24 and annular insulating gasket 26, which can provide a gas-tight and fluid-tight seal. Positive lead 18 connects cathode 16 to cap 24. Safety valve 28 is disposed in the inner side of cap 24 and is configured to decrease the pressure within electrochemical cell 10 when the pressure exceeds some predetermined value. Methods for assembling an electrochemical cell are described, for example, in Moses, U.S. Patent No. 4,279,972, Moses et al., U.S. Patent No. 4,401,735, and Kearney et al., U.S. Patent No. 4,526,846.

Other configurations of an electrochemical cell can also be used, including, for example, the button or coin cell configuration, the prismatic cell configuration, the rigid laminar cell configuration, and the flexible pouch, envelope or bag cell configuration. Furthermore, an electrochemical cell can have any of a number of different voltages (e.g., 1.5 V, 3.0 V, 4.0 V). Electrochemical cells are described, for example, in Berkowitz et al., WO 2005/034268. (US Serial No. 10/675,512), filed on September 30, 2003, and entitled "Batteries"; Berkowitz et al., U.S. Patent Application Publication No. US 2005/0112467 A1, published on May 26, 2005, and entitled "Battery Including Aluminum Component"; and Totir et al., U.S. Patent Application Publication No. 2005/0202320 A1, published on September 15, 2005, and entitled "Non-Aqueous Electrochemical Cells".

The following examples are meant to be illustrative and not to be limiting.

## Examples

Approximately 30 to 50 cathodes were made in Examples 1 and 2.

## Example 1

A cathode was prepared according to the following process.

First, 1.64 grams of Kraton® G1651 polymer, 66.15 grams of $FeS_2$, 1.05 gram of carbon black (SOLTEX AB55), and 2.86 grams of graphite powder (TIMREX KS6) were dispersed in a mixture of 11.32 grams of Shell Sol® A100 and 16.98 grams of Shell Sol® OMS using a double planetary mixer to form a slurry. The slurry had a viscosity of 37000 mPas, which was determined using a Brookfield® viscometer DV III (spindle #7, 50 RPM).

Then, the slurry was coated onto both sides of a current collector formed of a 35-micron thick, temper H18 foil of aluminum alloy 1N30. The slurry was coated onto the current collector in two passes (one pass per side) using an extrusion die technique, at a speed of 0.3 meters per minute., and a gap setting of 225 microns.

Next, the slurry was dried by passing the slurry through a dryer having two zones, each zone 1.2 m long. The temperature in the first was 35° C, and in the second zone 70°C. The dry thickness of the coated cathode was 0.315 millimeters.

Finally, the cathode that resulted from the coating and drying process was calendered at a line speed of 0.9 meters per minute to a final thickness of 0.244 millimeters. After calendering, the cathode included porosity of about 24 percent of the volume of the cathode material.

After the cathode had been calendered, the cathode included 32.5 milligrams of cathode material per square centimeter per cathode side.

## Example 2 (Comparative)

A cathode was prepared according to the following process.

First, 2.3 grams of Kynar® 761 polymer, 58.7 grams of $FeS_2$, 0.9 gram of carbon black (SOLTEX AB55), and 2.6 grams of graphite powder (TIMREX MX-15) were dispersed in a mixture of 35.5 grams of N-methyl-2-pyrrolidone using a double planetary mixer to form a slurry. The slurry had a viscosity of 10000 mPas, which was determined using a Brookfield® DV II viscometer. (spindle #7 , 50 RPM)

Then, the slurry was coated onto both sides of a current collector formed of a 35 -micron thick, temper III8 foil of aluminum alloy 1N30. The slurry was coated onto the current collector in two passes (one pass per side) using an extrusion die technique, at a speed of 0.26 meters per minute, and a gap setting of 254 micron.

Next, the slurry was dried by passing the slurry through a dryer having two zones. Each zone 1.2 m long. The temperature in the first was 75° C, and in the second zone 100° C. The dry thickness of the coated cathode was 0.358 millimeters.

## Other Embodiments

While cathodes with PVDF homopolymer and/or SEBS copolymer binders have been described, in some embodiments, a cathode can alternatively or additionally include one or more other binders, Examples of binders include polytetrafluoroethylene (PTFE), ethylene-propylene copolymers, hydrogenated nitrile rubber, fluoro-ethylene-vinyl ether copolymers, thermoplastic polyurethanes, and thermoplastic olefins.

As an additional example, in some embodiments, a cathode can be wound (e.g., around a mandrel).

An alternative battery arrangement is disclosed in Berkowitz et al., WO 2008/023347 which is being filed on the same day as the present application.

Other embodiments are in the claims.

## Claims

1.  A method of making a cathode (16) for a battery (10), the method comprising:

    forming a slurry comprising iron disulfide and a solvent, wherein the solvent comprises an aliphatic hydrocarbon, and/or N-methyl pyrrolidone, wherein the aliphatic hydrocarbon is iso paraffinic, and/or cyclo-paraffinic;
    applying the slurry to a substrate having a first side and a second side opposite the first side;
    drying the slurry to form a cathode material supported by the substrate;
    wherein drying the substrate comprises passing the substrate with applied slurry through multiple drying zones in which heated air is directed at the wet slurry; wherein the air speed and temperature are gradually ramped up from zone to zone;
    after drying, calendaring the cathode (16) to reduce the pores in the cathode material of the cathode (16) so that the cathode material has a porosity of at most 30%;
    wherein the cathode material comprises at least 91 percent to at most 99 percent by weight iron disulphide, and from at least 2 percent to at most 6 percent by weight of graphite; and
    wherein at least one of the first side and the second side of the substrate supports more than 21.5 milligrams of the cathode material per square centimeter of the first side and/or the second side.

2.  The method of claim 1, wherein at least one of the first side and the second side of the current collector supports at most 30 milligrams of the cathode material per square centimeter of the first side and/or the second side.

3.  The method of claim 1, wherein the current collector comprises a foil.

4.  The method of claim 1, wherein the current collector comprises aluminum, an alloy comprising aluminum, or a combination thereof.

5.  The method of claim 1, wherein the cathode material further comprises a binder.

6.  The method of claim 5 wherein the cathode material comprises at most five percent by weight of the binder.

7.  The method of claim 5 wherein the binder comprises a polymer selected from the group consisting of polyvinylidene fluorides and styrene-ethylene-butylene-styrene block copolymers.

8.  The method of claim 1, wherein the cathode material further comprises a conductive aid selected from carbon black.

9.  The method of claim 1, wherein the cathode material is in the form of at least one layer supported by the current collector.

## Patentansprüche

1.  Verfahren zur Herstellung einer Kathode (16) für eine Batterie (10), wobei das Verfahren Folgendes umfasst:

    Bilden einer Aufschlämmung, umfassend Eisendisulfid und ein Lösungsmittel, wobei das Lösungsmittel einen aliphatischen Kohlenwasserstoff und/oder N-Methylpyrrolidon umfasst, wobei der aliphatische Kohlenwasserstoff isoparaffinisch und/oder cycloparaffinisch ist;
    Aufbringen der Aufschlämmung auf ein Substrat mit einer ersten Seite und einer zweiten Seite gegenüber der ersten Seite;
    Trocknen der Aufschlämmung zur Bildung eines vom Substrat getragenen Kathodenmaterials, wobei das Trocknen des Substrats das Durchleiten des Substrats mit aufgetragener Aufschlämmung durch mehrere Trocknungszonen umfasst, in denen erwärmte Luft auf die nasse Aufschlämmung gerichtet ist;
    wobei die Luftgeschwindigkeit und die Temperatur schrittweise von Zone zu Zone hochgefahren werden;
    nach dem Trocknen Kalandrieren der Kathode (16), um die Poren im Kathodenmaterial der Kathode (16) zu verringern, sodass das Kathodenmaterial eine Porosität von höchstens 30 % aufweist;

wobei das Kathodenmaterial mindestens 91 Gewichtsprozent bis höchstens Gewichtsprozent Eisendisulfid und mindestens 2 Gewichtsprozent bis höchstens 6 Gewichtsprozent Graphit umfasst; und

wobei mindestens eine der ersten Seite und der zweiten Seite des Substrats mehr als 21,5 Milligramm des Kathodenmaterials pro Quadratzentimeter der ersten Seite und/oder der zweiten Seite trägt.

**2.** Verfahren nach Anspruch 1, wobei mindestens eine der ersten Seite und der zweiten Seite des Stromabnehmers höchstens 30 Milligramm des Kathodenmaterials pro Quadratzentimeter der ersten Seite und/oder der zweiten Seite trägt.

**3.** Verfahren nach Anspruch 1, wobei der Stromabnehmer eine Folie umfasst.

**4.** Verfahren nach Anspruch 1, wobei der Stromabnehmer Aluminium, eine Aluminium umfassende Legierung oder eine Kombination davon umfasst.

**5.** Verfahren nach Anspruch 1, wobei das Kathodenmaterial des Weiteren ein Bindemittel umfasst.

**6.** Verfahren nach Anspruch 5, wobei das Kathodenmaterial höchstens fünf Gewichtsprozent des Bindemittels umfasst.

**7.** Verfahren nach Anspruch 5, wobei das Bindemittel ein Polymer umfasst, ausgewählt aus der Gruppe bestehend aus Polyvinylidenfluoriden und Styrol-Ethylen-Butylen-Styrol-Blockcopolymeren.

**8.** Verfahren nach Anspruch 1, wobei das Kathodenmaterial des Weiteren ein leitfähiges Hilfsmittel umfasst, ausgewählt aus Ruß.

**9.** Verfahren nach Anspruch 1, wobei das Kathodenmaterial in Form von mindestens einer Schicht vorliegt, die durch den Stromabnehmer getragen wird.

**Revendications**

**1.** Procédé de fabrication d'une cathode (16) pour une batterie (10), le procédé comprenant :

former une bouillie comprenant du disulfure de fer et un solvant, le solvant comprenant un hydrocarbure aliphatique et/ou de la N-méthyl pyrrolidone, l'hydrocarbure aliphatique étant iso paraffinique et/ou cyclo-paraffinique ;
appliquer la bouillie sur un substrat ayant un premier côté et un second côté opposé au premier côté ;

sécher la bouillie pour former un matériau de cathode supporté par le substrat ;
dans lequel sécher le substrat comprend faire passer le substrat avec la bouillie appliquée à travers de multiples zones de séchage dans lesquelles de l'air chauffé est dirigé sur la bouillie humide ;
dans lequel la vitesse d'air et la température sont progressivement augmentées en rampe de zone à zone ;
après séchage, calandrer la cathode (16) pour réduire les pores dans le matériau de la cathode (16) de telle sorte que le matériau de cathode a une porosité d'au plus 30 % ;
dans lequel le matériau de cathode comprend au moins 91 pour cent à au plus 99 pour cent en poids de disulfure de fer, et d'au moins 2 pour cent à au plus 6 pour cent en poids de graphite ; et
dans lequel au moins l'un du premier côté et du second côté du substrat supporte plus de 21,5 milligrammes du matériau de cathode par centimètre carré du premier côté et/ou du second côté.

**2.** Procédé selon la revendication 1, dans lequel au moins l'un du premier côté et du second côté du collecteur de courant supporte au plus 30 milligrammes du matériau de cathode par centimètre carré du premier côté et/ou du second côté.

**3.** Procédé selon la revendication 1, dans lequel le collecteur de courant comprend une feuille.

**4.** Procédé selon la revendication 1, dans lequel le collecteur de courant comprend de l'aluminium, un alliage comprenant de l'aluminium ou une combinaison de ceux-ci.

**5.** Procédé selon la revendication 1, dans lequel le matériau de cathode comprend en outre un liant.

**6.** Procédé selon la revendication 5, dans lequel le matériau de cathode comprend au plus cinq pour cent en poids du liant.

**7.** Procédé selon la revendication 5, dans lequel le liant comprend un polymère choisi dans le groupe consistant en poly(fluorures de vinylidène) et copolymères à blocs styrène-éthylène-butylène-styrène.

**8.** Procédé selon la revendication 1, dans lequel le matériau de cathode comprend en outre un auxiliaire conducteur choisi parmi le noir de carbone.

**9.** Procédé selon la revendication 1, dans lequel le matériau de cathode est sous la forme d'au moins une couche supportée par le collecteur de courant.

# FIG. 1

FIG. 2

FIG. 3B

FIG. 3A

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005112462 A
- US 20050112467 A
- US 31350905 A
- US 5595841 A, Suzuki
- US 20050202320 A1
- US 5176968 A, Blasi
- US 345124 A, DeVirloy
- US 4279972 A, Moses
- US 4401735 A, Moses
- US 4526846 A, Kearney
- WO 2005034268 A, Berkowitz
- US 10675512 B
- US 20050112467 A1
- WO 2008023347 A, Berkowitz

**Non-patent literature cited in the description**

- **DAVID LINDEN.** Handbook of Batteries. Mc-Graw-Hill, 1995
- **FALK ; SALKIND.** Alkaline Storage Batteries. John Wiley & Sons, Inc, 1969